# EUROPÄISCHE PATENTSCHRIFT

(11) **EP 0 531 711 B1**
(45) Veröffentlichungstag und Bekanntmachung des Hinweises auf die Patenterteilung: **21.12.1994**
(21) Anmeldenummer: 92113380.7
(22) Anmeldetag: 06.08.1992
(51) Int. Cl.: B62D 25/16

(54) **Bewegliche, verstellbare Radlauf-/Kotflügel-Blende**
Movable, adjustable wheel housing/mud guard panel
Panneau de passage de roue/aile amovible et réglable

(30) Priorität: 13.09.1991 DE 4130509
(43) Veröffentlichungstag der Anmeldung: 17.03.1993
(73) Patentinhaber: MAN Nutzfahrzeuge Aktiengesellschaft, 80976 München (DE)
(72) Erfinder: Koch, Erich, W-8047 Karlsfeld (DE); Watzek, Gerhard, W-8000 München 45 (DE)

(56) Entgegenhaltungen:
- DE-U- 1 972 410
- US-A- 3 876 229

## Beschreibung

Die Erfindung bezieht sich auf einen Radlauf mit einer den oberen Teil des Radlaufkastens nach außen abdeckenden stationären Radlaufblende an Achsen und Rädern von Kraftfahrzeugen.

Zur Erfüllung von gesetzlichen Vorschriften und technischen Forderungen werden an Kraftfahrzeugen im Bereich der sich drehenden Rädern an gelenkten wie auch ungelenkten Achsen im Bereich der sich drehenden Räder sogenannte Radläufe angeordnet, die durch entsprechende Ausgestaltung von Bestandteilen der Karosserie oder durch zusätzliche Montage von speziell dazu ausgestalteten Anbauteilen, zum Beispiel Kotflügel, gebildet werden können. Die Machbarkeit einer größtmöglichen Abdeckung/Überdeckung des sich drehenden Rades nach der Fahrzeug-Außenseite hin zur Erzielung optimaler Wirksamkeit der Funktion des Radlaufes im Sinne von gesetzlichen Vorschriften, verbesserter Aerodynamik, Spritzschutz zur Verhütung von Eigen- und Fremdverschmutzung und Beschädigung, Partnerschutz durch Verminderung von sichtbehindernden Sprühnebeln usw. steht konträr zur technischen Forderung einer absolut sicheren Freigängigkeit des Rades im Radlauf, bedingt durch verschiedene konstruktive Vorgaben, wie z.B. Achslage, Reifengröße, Belastungszustand, Gebrauch von Schneeketten, Radeinschlag, Federwege, Achseinfederungen usw. Solcherart ist bei der Gestaltung der geometrischen Form der Radlauf-/Kotflügel-Blende eine definierte Standardhöhe vorgegeben. Es ist jedoch wünschenswert, insbesondere bei Nutzfahrzeugen die Blendenhöhe variabel gestalten zu können.

Der Erfindung liegt die Aufgabe zugrunde, dem im Radlauf sich drehenden Rad eine an die jeweiligen Verhältnisse angepaßte größtmögliche Abdeckung/Überdeckung zu geben.

Dies wird erfindungsgemäß dadurch erreicht, daß der stationären Radlaufblende eine weitere, bewegliche, höhenverstellbare Radlaufblende zugeordnet ist, die statisch und/oder dynamisch variierbar ist. Dabei erfolgt die variable statische Verstellung der beweglichen höhenverstellbaren Radlaufblende in Abhängigkeit von unterschiedlichen Achslagen, unterschiedlichen Reifengrößen, unterschiedlichen Beladezuständen, unterschiedlichen Chassishöhen und gegebenenfalls dem Anlegen von Schneeketten, die variable dynamische Verstellung der beweglichen, höhenverstellbaren Radlaufblende in Abhängigkeit von der Fahrgeschwindigkeit, den Federwegen, den Achseinfederungen und dem Radeinschlag. Solcherart ist es möglich, je nach Bauart des Fahrzeuges, Fahrgeschwindigkeit, Fahrbahnbeschaffenheit usw. die Radlaufblende den jeweiligen statischen und dynamischen Gegebenheiten durch variable Grundeinstellung und selbsregulierende Dynamik anzupassen und damit stets die erforderliche Freigängigkeit des Rades im Radlauf zu gewährleisten. Es wird eine variable, dynamische, sich selbst regulierende Einstellung der Blendenhöhe auf Relativbewegungen des Rades zur Radlauf-/Kotflügelblende erzielt.

Nach einer Variante der Erfindung besteht die bewegliche, höhenverstellbare Radlaufblende aus mehreren, auseinanderziehbaren Lamellen. Dies ermöglicht, daß die bewegliche Blende in der Höhe unter dem Radlaufboden wenig Raum einnimmt, indem mehrere Blendenlamellen hintereinander liegen, die z.B. in Gliederfunktion, zu einer größtmöglichen Überdeckung des Rades auseinanderziehbar sind.

In einer konkreten Ausgestaltung ist die bewegliche Radlaufblende über ein am Radlaufboden befestigtes Gelenkviereck angelenkt und über ein Verstellelement, das von einem an der Achse befestigten Impulsgeber angesteuert wird, höhenverstellbar. Dies ist eine mit möglichst einfachen Mitteln ausgeführte Konkretisierung der Erfindung.

Die Erfindung ist in einem Ausführungsbeispiel dargestellt und beschrieben.

Es zeigen:
- Fig. 1: einen Radlauf in der Seitenansicht
- Fig. 2: einen Schnitt des Radlaufes in der Vorderansicht.

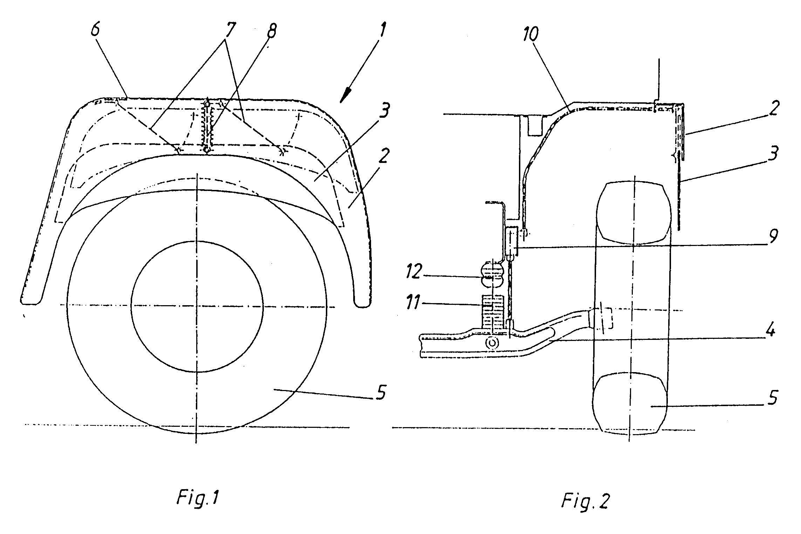

Die Figuren 1 und 2 zeigen einen Radlauf 1, der ein an einer Achse 4 aufgehängtes Rad 5 übergreift. Der Radlauf 1 weist eine am Radlaufboden 6 befestigte stationäre Radlaufblende 2 auf, die das Rad 5 nach außen abdeckt. Hinter der stationären Radlaufblende 2 ist eine bewegliche, höhenverstellbare Radlaufblende 3 angeordnet, die in Fig. 2 in der eingefahrenen Position punktiert und in der ausgefahrenen Position, das heißt, mit der größten Radüberdeckung, unterbrochen liniert dargestellt ist. Die Radlaufblende 3 ist im Radlaufboden 6 über eine Gelenkviereck 7 angelenkt und über ein Verstellelement 8 höhenverstellbar. Das Verstellelement 8 wird durch einen Impulsgeber 9, der mit dem Verstellelement 8 über Steuerleitung 10 verbunden ist, beaufschlagt. Das Verstellelement 8 kann mechanisch, pneumatisch, elektrisch, hydraulisch oder elektromechanisch ausgebildet sein. Die Achse 4 weist ein Federpaket 11 auf, das sich an einem Endanschlag 12 abstützt.

### Bezugszeichenliste

- 1: Radlauf
- 2: stationäre Radlaufblende
- 3: bewegliche, verstellbare Radlaufblende
- 4: Achse
- 5: Rad
- 6: Radlaufboden
- 7: Gelenkviereck
- 8: Verstellelement
- 9: Impulsgeber
- 10: Steuerleitung
- 11: Achsfeder
- 12: Anschlag

## Patentansprüche

1. Radlauf mit einer den oberen Teil des Radlaufkastens nach außen abdeckenden stationären Radlaufblende an Achsen und Rädern von Kraftfahrzeugen, dadurch gekennzeichnet, daß der stationären Radlaufblende (2) eine weitere, bewegliche, höhenverstellbare Radlaufblende (3) zugeordnet ist, die statisch und/oder dynamisch variierbar ist.

2. Radlauf nach Anspruch 1, dadurch gekennzeichnet, daß die variable statische Verstellung der beweglichen, höhenverstellbaren Radlaufblende (3) in Abhängigkeit von unterschiedlichen Achslagen, unterschiedlichen Reifengrößen, unterschiedlichem Beladezustand, unterschiedlichen Chassishöhen und dem Anlegen von Schneeketten erfolgt.

3. Radlauf nach Anspruch 1, dadurch gekennzeichnet, daß die variable dynamische Verstellung der beweglichen, höhenverstellbaren Radlaufblende (3) in Abhängigkeit von der Fahrgeschwindigkeit, den Federwegen, den Achseinfederungen und dem Radeinschlag erfolgt.

4. Radlaufblende nach den Ansprüchen 1 bis 3, dadurch gekennzeichnet, daß die bewegliche, höhenverstellbare Radlaufblende (3) aus mehreren, auseinanderziehbaren Lamellen besteht.

5. Radlauf nach einem oder mehreren der Ansprüche 1 bis 4, dadurch gekennzeichnet, daß die bewegliche Radlaufblende (3) über ein am Radlaufboden (6) befestigtes Gelenkviereck (7) angelenkt und über ein Verstellelement (8), das von einem an der Achse (4) befestigten Impulsgeber (9) angesteuert wird, höhenverstellbar ist.

6. Radlauf nach Anspruch 5, dadurch gekennzeichnet, daß das Verstellelement (8) mechanisch, pneumatisch, hydraulisch, elektromotorisch oder elektromechanisch wirksam setzbar ist.

## Claims

1. Wheel case with a stationary wheel-case fairing at the axles and wheels of motor vehicles, which wheel-case fairing covers the upper part of the wheel case towards the outside, characterised in that the stationary wheel-case fairing (2) is allocated another, movable wheel-case fairing (3) which is adjustable in height and statically and/or dynamically variable.

2. Wheel case as under Claim 1, characterised in that the variable static adjustment of the movable wheel-case fairing (3), which is adjustable in height, is carried out in dependence of different axle positions, different tyre sizes, different load statuses, different chassis heights and the attachment of snow chains.

3. Wheel case as under Claim 1, characterised in that the variable dynamic adjustment of the movable wheel-case fairing (3), which is adjustable in height, is carried out in dependence of travelling speed, spring travel, axle compression and steering angle.

4. Wheel-case fairing as under the Claims 1 to 3, characterised in that the movable wheel-case fairing (3), which is adjustable in height, consists of several extending panels.

5. Wheel case as under one or several of the Claims 1 to 4, characterised in that the movable wheel-case fairing (3) is triggered via an articulated tetragonal device (7) attached to the wheel-case floor (6) and adjusted in height via an adjusting element (8) which is triggered by a pulse transmitter (9) attached to the axle (4).

6. Wheel case as under Claim 5, characterised in that the adjusting element (8) can be put into operation mechanically, pneumatically, hydraulically, electromechanically or by means of an electric motor.

## Revendications

1. Passage de roue comportant un panneau de passage de roue, fixe, qui ferme vis-à-vis de l'extérieur la partie supérieure de la caisse du passage de roue, sur les essieux et les roues de véhicules à moteur, caractérisé en ce que le panneau fixe de passage de roue (2) est complété par un autre panneau de passage de roue (3), mobile, réglable an hauteur, et qui point être modifié de manière statique et/ou dynamique.

2. Passage de roue selon la revendication 1, caractérisé en ce que la réglage statique du panneau de passage de roue (3), mobile réglable en hauteur se fait en fonction des débattements différents, des différentes dimensions de pneus, des états de chargement différents, des hauteurs de châssis différents et de l'installation de chaînes à neige.

3. Passage de roue selon la revendication 1, caractérisé en ce que le réglage dynamique du panneau de passage de roue (3) mobile, réglable en hauteur, se fait en fonction de la vitesse du véhicule, des courses de ressorts, de la suspension de l'essieu et du débattement de la roue.

4. Passage de roue selon les revendications 1 à 3, caractérisé en ce que le panneau de passage de roue (3), mobile, réglable en hauteur, se compose de plusieurs lamelles extensibles.

5. Passage de roue selon une ou plusieurs des revendications 1 à 4, caractérisé en ce que le panneau de passage de roue (3), mobile, est articulé par l'intermédiaire d'un parallélogramme articulé (7) fixé au fond (6) du panneau de roue, et qui est réglable en hauteur par commande d'un générateur d'impulsions (9) fixé à l'essieu (4).

6. Passage de roue selon la revendication 5, caractérisé en ce que l'élément de réglage (8) agit de manière mécanique, pneumatique, hydraulique, électrique ou électromécanique.
